# EUROPEAN PATENT APPLICATION

(11) **EP 4 797 680 A1**
(43) Date of publication of application: **26.08.2026**
(21) Application number: 25158765.5
(22) Date of filing: 19.02.2025
(51) Int. Cl.: H04N 13/302, H04N 13/366, H04N 13/383

(54) **DEVICE FOR GENERATING AN AUTOSTEREOSCOPIC DISPLAY INPUT FOR A MEDICAL IMAGE ACQUISITION DEVICE AND METHOD THEREFORE**

(71) Applicant: Leica Instruments (Singapore) Pte Ltd., Singapore 618299 (SG)
(72) Inventor: YANG, Gao, 618299 Singapore (SG); LECK, Kheng Swee, 618299 Singapore (SG)
(74) Representative: Paustian & Partner Patentanwälte mbB

(57) **Abstract**

A first aspect of the present disclosure is related to a device for generating an autostereoscopic display input for a medical image acquisition device, configured to:
- obtain image information from a medical image acquisition device;
- obtain user position information ;
- determine a selected user position information based on the obtained user position information;
- determine a display input for an autostereoscopic display based on the image information and on the selected user position information ;
- provide the display input for an autostereoscopic display.

## Description

### Technical Field

This disclosure is related to devices for generating an autostereoscopic display input for a medical image acquisition device and for methods therefor.

### Background

Stereoscopic 3D screens that require glasses enable several viewers to watch the same display and experience depth perception. However, the glasses themselves can be uncomfortable, and these displays tend to be large and cumbersome to position and relocate in surgical environments. Fixed-perspective autostereoscopic screens generate a predefined number of views, so multiple viewing positions are possible. The trade-off for offering multiple viewpoints is a considerable drop in spatial resolution, effectively reducing the pixel count. Furthermore, this can create obstacles in achieving low and consistent latency, as disclosed video processing techniques may not always meet the necessary performance requirements. Improvements are desirable.

### Summary

An object of the present disclosure is to improve 3D image display of medical images.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for generating an autostereoscopic display input for a medical image acquisition device, *configured to:*
- *obtain image information from a medical image acquisition device;*
- *obtain user position information ;*
- *determine a selected user position information based on the obtained user position information;*
- *determine a display input for an autostereoscopic display based on the image information and on the selected user position information* ;
- *provide the display input for an autostereoscopic display.*

Image information of a medical image acquisition device can come from arbitrary sources. Image information can, e.g., come from a 3D camera (e.g. a stereoscopic or a depth-sensing camera). A stereoscopic camera captures images of a left and right view. Additional views can be performed by interpolation or extrapolation to generate additional views, in particular based on a disparity map on the left and the right view images. Additionally or alternatively, image information can also come from a multi-camera rig, i.e. an array of 2D cameras. Additionally or alternatively, image information can come from one or more depth-sensing cameras, such as time-of-flight or structured-light cameras. Image information can also be based on computer-generated 3D models of a microscope's view. Additionally or alternatively, image information can also be provided by a single 2D camera. The 2D images can be converted to a "3D" view if depth layers are estimated, e.g., based on other sensor information and/or based on scene information of a viewed sample.

A medical image acquisition device for image acquisition can be a medical imaging device, e.g., a microscope, an endoscope, an exoscope, or it can be a device that is configured to exchange information with an imaging device. If the device exchanges information with an imaging device, the device can be a network device and in particular be in communication with a plurality of imaging devices. The autostereoscopic display needs not to be a part of the medical image acquisition device. It can be a separate device.

User position information can be any user position information based on which a gaze of the user can be inferred in order to determine a display input for an autostereoscopic display. A selected user position will be based on the obtained user position information. However, the obtained user position information may refer to a different position of the user as the selected user position information. For example, an obtained user position information may be an information about a user's head. Based on this information a position of the user's gaze is determined. The selected user information, on the other hand, may be the user's gaze directly. Alternatively, an obtained user position and a selected user position may relate to exactly the same position information. The selected user position information can also be a decision to use an old user position information instead of a new user position information, in particular in case processing of the new user position information takes too long and would therefore induce latencies that hamper a hand-eye coordination of a user.

An autostereoscopic display may be a type of 3D display that provides a three-dimensional image without requiring special glasses. It may use lens-like elements and/or barriers in front of a screen to direct different images to the different eyes of a user, thereby creating a stereoscopic effect. An autostereoscopic display may comprise lenticular lenses, parallax barriers, and/or holographic generators for creating glasses-free 3D images. Left and/or right pixels from an stereo image acquisition device may be assigned to a pixel at the autostereoscopic display.

By selecting a user position information based on obtained user position information it can be decided to use actual user position information or a user position information already determined based on previously obtained user position information. Using the latter may avoid or at least reduce computation resources for determining selected user position information based on newly obtained user position information. This may reduce or avoid latency for eye adapted life imagery and an immersive hand-eye coordination for a user, e.g. a surgeon, can be obtained.

An embodiment of the first aspect is related to a device for generating an autostereoscopic display input for a medical image acquisition device, *configured to:*
- *determine an* eye *position information based on the user position information and*/*or on the selected user position information.*

In order to determine a gaze of the user, an eye position can be determined based on the user position. This can be done on the obtained user position information and/or based on the selected user position information. Determining an eye position based on the obtained user position may have the advantage that a decision whether to use or not to use a current gaze information can be based on current eye position and may therefore be more accurate. However, a drawback of determining an eye position based on the obtained user position may be additional induced latency into the critical path of the display input determination. On the other hand, determining an eye position information based on the selected user position may be avoid inducing the additional delays. However, a decision whether a current user's gaze should be used for a next display input needs then to be made on the obtained (raw) user information, which may not be directly related to a user's gaze and therefore may provide less stable results on where the user's gaze is directed to.

An embodiment of the first aspect is related to a device for generating an autostereoscopic display input for a medical image acquisition device, *wherein the determination of a display input comprises a determination of an assignment of left and*/*or right pixels for an autostereoscopic display.*

A display input can be provided by any form in which the 3D-information for the autostereoscopic display can be communicated. A determination of a display input may comprise a determination of an assignment of subpixels from the left or right channel of a stereo camera to subpixels of an autostereoscopic display.

Display input can in particular be based on eye position information. Based on this information the determination of the display input may comprise an assignment of left-eye pixels and right-eye pixels to the different subpixels of the autostereoscopic display. The assignment itself may be determined in a separate step and in particular on a different signal path. This may be done to reduce latencies that affect the display input/output and therefore the hand-eye coordination of the user.

An embodiment of the first aspect is related to a device for generating an autostereoscopic display input for a medical image acquisition device, *comprising:*
- *a first computer configured to operate the determination of the eye position information and*/*or a determination of an assignment of left or*/*and right pixels to an autostereoscopic display; and*
- *a second computer configured to operate the determination of the display input, in particular the execution of the assignment of left and*/*or right pixels to an autostereoscopic display.*

A computer can be any hardware and/or software based processing device, such as a personal computer, a microcontroller, an FPGA, etc.

The determination of the eye position information, in particular when based on the obtained user position information, may be processing intensive and may therefore introduce delays (latencies) into the processing path. If also the display input determination is comprised by this path, the delays may lead to a deteriorated hand-eye-coordination, as the visual feedback to the user is delayed.

Therefore, the processing of the determination of the eye position information may be computationally separated from the processing of the display input. The determination of the eye position information (or the determination of the gaze in general) may be performed on a first computer.

The second computer can be a video processor of the image acquisition device, e.g. of a microscope. This will assure that, the determination of the display input can be performed in realtime, such that no delays are introduced, which may hamper hand-eye coordination of the user. However, if the determination of the user gaze may take too long to calculate, the selected user position information may not represent a current user gaze, but, e.g., a previously determined user gaze, e.g. a user gaze determined few milliseconds before. Therefore, the display input determination may reflect outdated user gaze.

An embodiment of the first aspect is related to a device for generating an autostereoscopic display input for a medical image acquisition device, *wherein the second computer is configured to perform the assignment of pixels from a left channel or from a right channel to a pixel of the display.*

The first computer may determine an eye position based on the obtained user position information (or based on the selected user position information). Furthermore, on the first computer the pixel assignment for the autostereoscopic display may be determined, i.e. whether a left or a right pixel information may be assigned to each pixel of the autostereoscopic display.

The second computer may perform an assignment of a left or a right pixel to the pixels of the autostereoscopic display (wherein the assignment itself may have been determined by the first computer). In other words the routing of the left or right view pixel data may be performed on the second computer. This will assure that, the assignment of pixels will be performed in realtime, such that no delays are introduced, which may hamper hand-eye coordination of the user.

Hence, the first computer may be a long latency path, since computationally intensive processing steps are performed by this computer. In case a latency introduced by the computation of the first computer is too long, the second computer may not wait for the results of the first computer, e.g. of the pixel assignment, but performs the pixel assignment based on the last pixel assignment it obtained.

A goal is to reduce a latency of the life imagery. Therefore, life imagery processing may be on a different signal path compared to the eye position determination and the pixel assignment determination. The assignment information may come from a first computer and is communicated to a second computer, the second computer then assigns the pixels to the screen, i.e. generates the display input based on the determined assignment. In other words: Pixel determination and the assignment determination is made concurrent to the assignment itself.

An embodiment of the first aspect is related to a device for generating an autostereoscopic display input for a medical image acquisition device, *comprising:*
- *a dedicated computer configured to operate the determination of the selected user information and the determination of the display input, in particular the pixel determination.*

The dedicated computer may in particular be a video processor of the medical image acquisition device. For example, the dedicated computer can be a video processor of the microscope. The dedicated computer may also be a video processor of the autostereoscopic display. On the dedicated computer the gaze tracking function, the determination of the assignment, and the execution of the assignment can be performed by at least partly concurrent tasks. If delays introduced by the tasks related to the gaze tracking function and/or to the determination of the assignment are too large, then the task related to the execution of the assignment may work on earlier assignment information, as already described above.

An embodiment of the first aspect is related to a device for generating an autostereoscopic display input for a medical image acquisition device, *wherein the dedicated computer is one of:*
- *a computer of the medical image acquisition device* ;
- a *computer of the autostereoscopic display* .

A computer of the medical image acquisition device can be a computer comprised by the image acquisition device. Additionally or alternatively, such a computer may be a device which is configured to communicate with the medical image acquisition device, e.g. a network-based device. The same may hold for a computer of the autostereoscopic display.

An embodiment of the first aspect is related to a device for generating an autostereoscopic display input for a medical image acquisition device, *comprising:*
- *check if obtaining a user position information and*/*or of determining a selected user position information takes longer than a pre-determined threshold;*
- *if this is confirmed, determine the display input based on a previously obtained user position information and*/*or a previously determined selected user position information.*

Since the determination of the display input may be critical for an immersive hand-eye coordination of the user, delays in this operation may needed to be reduced. However, the determination of the display input is based - at least indirectly - on user position information. Hence, delays that emerge from computing a user position information and/or from determine a pixel assignment for the autostereoscopic display may also delay the determination of the display input (e.g. the assignment of left or right pixels to the pixels of the autostereoscopic display). Therefore, in this case, it may be decided to use older user position information (i.e. older gaze information). The selected user position information may then be defined as a gaze information which had been previously determined, and which may have already been used for assigning left or right pixels to the pixels of the display. In other words changes in a user's gaze may be ignored, in case the processing related to the changed user gaze takes too long and may delay the determination and/or provision of the display input.

An embodiment of the first aspect is related to a device for generating an autostereoscopic display input for a medical image acquisition device, *wherein the determination of a selected user position information is an automatic function.*

The determination of the selected user information may determine if actual user position information, i.e. the latest measured user position information or information based thereon, should be used for the determination of an actual display input, or if other information, e.g. older user position information, should be used for determining the actual display input. In the latter case, the display input may not reflect the correct gaze of the user but delays in the determination of the display input are avoided. This function can be an automatic function, which does not need any further user input.

An embodiment of the first aspect is related to a device for generating an autostereoscopic display input for a medical image acquisition device, *wherein the determination of a selected user position information is based on a change of the user position information compared to a pre-determined threshold.*

A change in a user position may indicate that the user does not gaze at the autostereoscopic display anymore. Glare or poor viewing angles can prompt a new viewing point. Additionally or alternatively, posture changes may be performed to reduce strain on the neck, back, or shoulders. These viewing positions should be taken into account when determining a new display input (they may be disregarded though in case their determination would inflict too large delays, as described above). However, other changes in user gaze may hint to a user gaze where the user does not watch the display anymore. For example, accessing or adjusting instruments and communicating with the surgical team may also lead to gaze changes. These changes may be characterized by a magnitude that exceeds a pre-defined threshold. In this case, the new gaze may not be used for a new display input determination. Rather an old user position information, e.g. the latest determined user position information, can then be used as selected user position information.

An embodiment of the first aspect is related to a device for generating an autostereoscopic display input for a medical image acquisition device, *configured to:*
- *indicate that no new user position information is selected; and*
- *if no new position user information is selected, determine the display input based on previously obtained and*/*or selected user position information.*

A selected user position can also comprise the information that no new user position information is selected. This can be due to the fact that new user position information based on actual measurement data takes too long to determine. Additionally or alternatively, this can be due to the fact that a change in a user position is considered as not leading to a user gazing on the display and therefore no adaptation of the display input to the new user gaze/position is necessary. Additionally or alternatively, if an obtained user position is essentially the same as the user information obtained before, then it can be concluded that the user's gaze has not changed at all. In such cases, the display input, e.g. the assignment of left or right pixels to the pixels of the autostereoscopic display can be based on previously determined position information, in particular the latest obtained/determined user position information. In this case the assignment of pixels to the different channels of the display is based on old head/eye tracking data.

An embodiment of the first aspect is related to a device for generating an autostereoscopic display input for a medical image acquisition device, *configured to:*
- *determine a motion type of the user based on an obtained position information and or a difference between two obtained position informations from different times;*
- *depending on the determined motion type, determine a selected user position information* as *previously selected user position information.*

Based on a user position or on a change of user positions, a motion type can be identified. Such a motion type can be related to a gesture of a user or a behavior of the user (e.g. user starts talking, user is looking sidewards, user reaches for an instrument, user turns her/his back to the camera, or anything else which could lead to the conclusion that the user is not gazing at the display.) In this case, there is no need for using new user position information. Then old user position information can be used as selected user position information, or an old selected user position information may be used. This information is already available and can therefore be provided to the determination of the display input without inflicting any delays.

An embodiment of the first aspect is related to a device for generating an autostereoscopic display input for a medical image acquisition device, *configured to:*
- *activate and*/*or de-activate by a user the determination of a selected user position information.*

When a determination of selected user information is de-activated, the selected user information may equal the obtained user information. Hence, there is no selection between current and old obtained user information anymore and therefore no protection against latencies that may deteriorate hand-eye-coordination. However, thereby it may be assured that a new gaze position of the user is always considered for a determination of a display input. On the other hand, when this function is manually activated protection is activated against delays caused by determination a user gaze and/or by determination of an assignment of a left or right pixel to a pixel of the display.

A second aspect of the present disclosure is related to a method for generating an autostereoscopic display input for a medical image acquisition device,
*comprising:*
- *obtaining image information from a medical image acquisition device* ;
- *obtaining user position information ;*
- *determining a selected user position information based on the obtained user position information;*
- *determining a display input for an autostereoscopic display based on the image information and on the selected user position information* ;
- *providing the display input for an autostereoscopic display.*

Embodiments according to the second aspects can comprise one or more functions and/or features of the device according to the first aspect of this disclosure. A method according to the second aspect can comprise one or more steps to execute one or more functions of a device according to the first aspect of this disclosure. Steps of a method according to the second aspect of this disclosure can be configured such that thy comprise features of a device according to the first aspect of this disclosure.

A third aspect of the present disclosure is related to a computer program with program code,
*for performing the method according to the preceding aspect when the computer program is run on a processor.*

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a device for generating an autostereoscopic display input for a medical image acquisition device according to an embodiment of this disclosure.
Fig. 2 illustrates a device for generating an autostereoscopic display input for a medical image acquisition device according to an embodiment of this disclosure.
Fig. 3 illustrates a microscope system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

### Detailed description

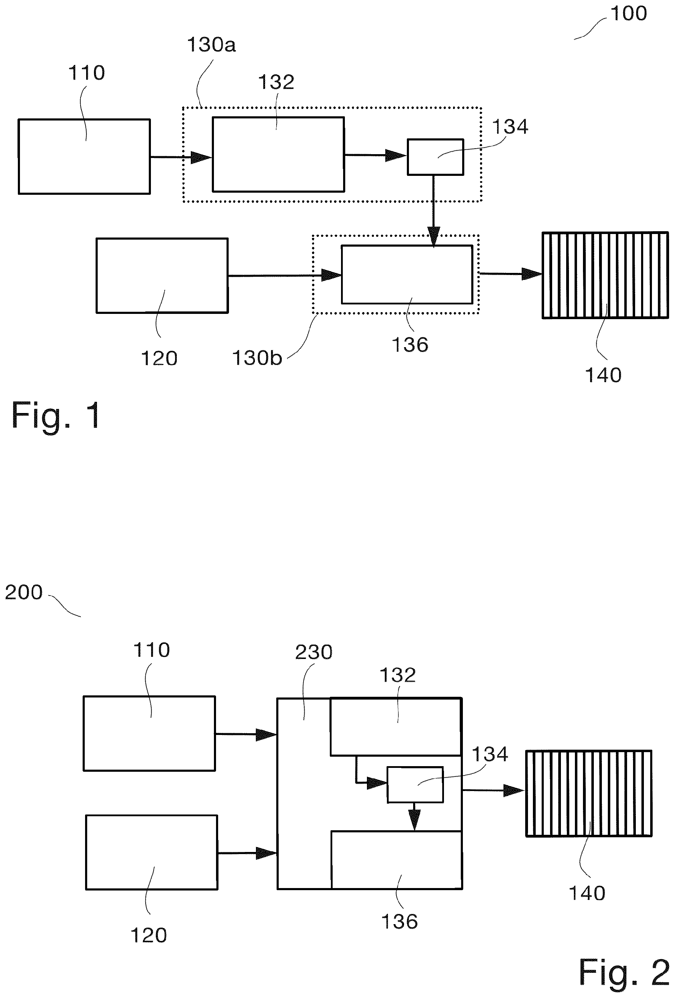

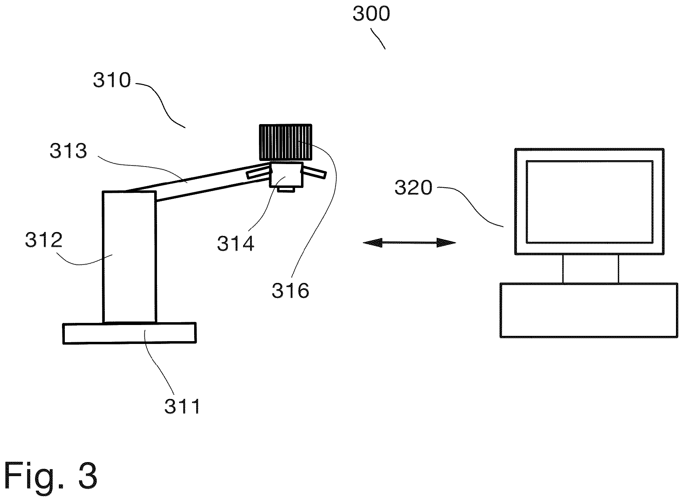

Fig. 1 illustrates a device 100 for generating an autostereoscopic display input for a medical image acquisition device according to an embodiment of this disclosure. In this case the medical image acquisition device is a microscope. The microscope is attached to an autostereoscopic display 140. Furthermore, an head/eye-tracking sensor is attached to the display 140 which senses the head/eye position of a user. Such a system is also illustrated in Fig. 3.

Information 110 from an head/eye-tracking sensor is provided to a first computer 130a. Based on this information a user gaze is determined 132. Based on the user gaze, a pixel assignment is determined. The pixel assignment defines whether the left or the right view pixel of the microscope images is assigned to each pixel of the autostereoscopic display 140 that is used to display the microscope images to the user.

Concurrently, the images 120 are provided to a second computer 130b from the optical system of the microscope. The images comprise 3D image information from a 3D camera of the microscope. In this embodiment, the second computer is the video processor of the microscope. The video processor comprises a function 136 that assigns the pixels of the microscope images to the right eye channel and to the left eye channel of the autostereoscopic display 140.

Based on the obtained image information and/or based on the determined user gaze, a function 134, which is executed by the first computer 130a, decides if the newest user gaze information is used for the assignment of the left or right view microscope image pixels to the pixels of the display 140, or if older information, e.g. a previously computed user gaze, is selected for the generation of the display input. The function 134 can be executed by the first computer 130a or by the second computer 130b or even by a third computer, which is configured to communicate with the first computer 130a and second computer 130b.

One criteria for the decision of function 134 may be a time expected for the new user gaze to be determined or for the determination of the pixel assignment to be determined based on the user gaze. If this time is too large it may cause delays of the visual information at the display. A further criteria may be a determined gaze value or a gaze difference between a new gaze value and a preceding gaze value. If based on this information it is concluded that the user does not look at the display, then the new gaze position needs not to be used for determining the pixel assignment. This also may save processing time and minimize delays.

In one example of this embodiment, head/eye-tracking is processed on a processor external to the microscope system. It then passes (e.g. via USB/Ethernet) the positional or pixel assignment control data to the microscope's pixel mixer module, which then assigns the left and right video subpixels to the output video signal. In other words, the eye position data (e.g. a pair of [x, y, z] triplets) can be passed to the microscope video processor to generate the pixel assignment map.

Fig. 2 illustrates a device 200 for generating an autostereoscopic display input for a medical image acquisition device according to an embodiment of this disclosure. In this embodiment only a single computer 230 is used, e.g. the video controller of the microscope, to execute functions 132, 134, and 136.

Hence, user position information 110 as well as 3D-images of a sample are provided to the microscopes video controller 230. The video controller 230 executes a first function which determines user gaze and pixel assignment to the autostereoscopic display. Furthermore, a function 134, which receives information from function 132 decides if new user position information is used or if old user position information is used. This can be based, as described in relation to Fig. 1 on estimation of a processing time for the user gaze estimation and/or the determination of the pixel assignment. Furthermore, this can be based on identified motion types. Based on the motion type, it can be inferred by a function of video controller that the user does look or does not look at the display 140. The selected user position information is then provided to function 136 in order to perform the actual pixel assignment to the two channels (left eye and right eye) of the signal for the autostereoscopic display.

In one example of this embodiment, the sequence of operations can be as follows: A user position information is obtained, e.g. by an head/eye tracking sensor. Then user position information is selected, i.e. either old user position information is taken (lock on) or new user position information is taken, because the user has changed his gaze/view. Based on this information, the pixel assignment is determined for the images of the different eyes (to achieve the 3D impression) of the autostereoscopic display. Hence, depending on the selected user information an assignment between left and right eye information for the autostereoscopic display is based on old or on new user position information.

In one example of this embodiment, head/eye-tracking is integrated as a part of a device's video processor, but on a separate hardware data path from the main microscope camera videos. A frame buffer and deep learning processing unit are inside the microscope's CCU FPGA alongside the microscope video pipelines, and only the tracking outcome is passed to the pipeline's pixel mixing stage. If the tracking processor only outputs stereo video with subpixels already assigned, a distinct pair of colors can be used (e.g. dark for the left eye, bright for the right eye). The microscope video processor can then extract this assignment information by analyzing the video to extract the assignment map.

Some embodiments relate to a microscope comprising a system as described in connection with one or more of the Figs. 1 to 3. Alternatively, a microscope may be part of or connected to a system as described in connection with one or more of the Figs. 1 to 2.

Fig. 3 shows a schematic illustration of a system 300 configured to perform a method described herein. The system 300 comprises a microscope 310 and a computer system 320. The microscope 310 is configured to take images and is connected to the computer system 320. The microscope 310 comprises a stand 311, a first arm section 312, and a second arm section 313, by which the optical system 314 of the microscope can be moved within a pre-defined work-space. Furthermore, attached to the optical system 314 is an autostereoscopic display 316 for glasses-free 3D observation by a user. The display 316 comprises an eye/head-tracking camera. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 3. Alternatively, a microscope may be part of or connected to a system as described in connection with one or more of the Figs. 1 to 3. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference signs

- 100: device structure and internal information flow
- 110: eye tracking sensor information
- 120: microscope images
- 130a: first computer
- 130b: microscope video processor
- 132: determination of user gaze
- 134: lock function
- 136: pixel multiplexing
- 140: autostereoscopic display
- 200: device structure and internal information flow
- 230: microscope video controller
- 300: microscope system
- 310: microscope
- 311: microscope stand
- 312: first arm section
- 313: second arm section
- 314: optical system
- 316: autostereoscopic display
- 320: computer system

## Claims

1. A device (130) for generating an autostereoscopic display input for a medical image acquisition device,
configured to:
- obtain image information (110) from a medical image acquisition device;
- obtain user position information (120);
- determine a selected user position information (134) based on the obtained user position information;
- determine a display input for an autostereoscopic display (140) based on the image information (110) and on the selected user position information (134);
- provide the display input (136) for an autostereoscopic display.

2. The device (130) according to the preceding claim,
configured to:
- determine an eye position information based on the user position information (120) and/or on the selected user position information.

3. The device (130) according to one of the preceding claims,
wherein the determination of a display input comprises a determination of an assignment of left and/or right pixels for an autostereoscopic display.

4. The device (130) according to one of the preceding claims,
comprising:
- a first computer configured to operate the determination of the eye position information and/or a determination of an assignment of left or/and right pixels to an autostereoscopic display; and
- a second computer configured to operate the determination of the display input, in particular the execution of the assignment of left and/or right pixels to an autostereoscopic display.

5. The device (130) according to one of the preceding claims,
wherein the second computer is configured to perform the assignment of pixels from a left channel or from a right channel to a pixel of the display.

6. The device (130) according to one of the preceding claims,
comprising:
- a dedicated computer (130) configured to operate the determination of the selected user information and the determination of the display input, in particular the pixel determination.

7. The device (130) according to the preceding claim,
wherein the dedicated computer (130) is one of:
- a computer of the medical image acquisition device (310);
- a computer of the autostereoscopic display (140, 316).

8. The device (130) according to one of the preceding claims,
comprising:
- check if obtaining a user position information and/or of determining a selected user position information (134) takes longer than a pre-determined threshold;
- if this is confirmed, determine the display input based on a previously obtained user position information and/or a previously determined selected user position information.

9. The device (130) according to one of the preceding claims,
wherein the determination of a selected user position information is an automatic function.

10. The device (130) according to one of the preceding claims,
wherein the determination of a selected user position information is based on a change of the user position information compared to a pre-determined threshold.

11. The device (130) according to one of the preceding claims,
configured to:
- indicate that no new user position information is selected; and
- if no new position user information is selected, determine the display input based on previously obtained and/or selected user position information.

12. The device (130) according to one of the preceding claims,
configured to:
- determine a motion type of the user based on an obtained position information and or a difference between two obtained position informations from different times;
- depending on the determined motion type, determine a selected user position information as previously selected user position information.

13. The device (130) according to one of the preceding claims,
configured to:
- activate and/or de-activate by a user the determination of a selected user position information.

14. A method (130) for generating an autostereoscopic display input for a medical image acquisition device,
comprising:
- obtaining image information (110) from a medical image acquisition device (140);
- obtaining user position information (120);
- determining a selected user position information (134) based on the obtained user position information;
- determining a display input for an autostereoscopic display (140) based on the image information (110) and on the selected user position information (134);
- providing the display input (136) for an autostereoscopic display.

15. Computer program with a program code
for performing the method according to the preceding claim when the computer program is run on a processor.
